# FASCICULE DE BREVET EUROPEEN

(11) **EP 3 349 998 B1**
(45) Date de publication et mention de la délivrance du brevet: **03.03.2021**
(21) Numéro de dépôt: 16734622.0
(22) Date de dépôt: 30.06.2016
(51) Int. Cl.: B60H 1/00

(54) **DISPOSITIF DE CLIMATISATION POUR VEHICULE AUTOMOBILE**
KLIMATISIERUNGSVORRICHTUNG FÜR KRAFTFAHRZEUG
AIR-CONDITIONING DEVICE FOR MOTOR VEHICLE

(30) Priorité: 15.09.2015 FR 1558613
(43) Date de publication de la demande: 25.07.2018
(73) Titulaire: Valeo Systemes Thermiques, 78320 Le Mesnil Saint Denis (FR)
(72) Inventeur: JOVET, Bastien, 73210 Peisey-Nancroix (FR); AILLOUD, Fabrice, 78280 Guyancourt (FR); MARTINELL, Amanda, 78640 Neauphle-le-Chateau (FR); PIERRES, Philippe, 78990 Elancourt (FR)
(74) Mandataire: Tran, Chi-Hai
(86) Numéro de dépôt international: PCT/EP2016/065283
(87) Numéro de publication internationale: WO 2017/045792

(56) Documents cités:
- WO-A2-2006/027219
- DE-A1-102012 018 537
- US-A1- 2005 115 704

## Description

La présente invention concerne un dispositif de climatisation pour véhicule automobile.

Les véhicules automobiles sont des lieux clos de faible volume, soumis à des environnements changeants et souvent rigoureux. Il est donc indispensable d'y renouveler régulièrement l'air, et d'en réguler la température.

On utilise à cet effet des dispositifs de climatisation, ou climatiseurs. Ces systèmes sont conçus de façon à ce que de l'air réchauffé ou refroidi soit soufflé à l'intérieur du véhicule.

Les dispositifs de climatisation pour véhicule automobile, en particulier les systèmes HVAC (Heating, Ventilation and Air Conditioning en langue anglaise) comportent généralement un circuit d'air entre au moins une bouche d'admission et au moins une bouche d'évacuation, sur lequel sont interposés divers moyens de traitement de l'air. La bouche d'admission d'air est une entrée d'air extérieur et/ou une entrée d'air recyclé. Les moyens de traitement de l'air sont notamment des moyens de ventilation pour mettre en mouvement un flux d'air à travers le circuit, des moyens de chauffage et/ou de refroidissement, comme par exemple un radiateur de chauffage d'air et un évaporateur destiné à refroidir l'air. Différents volets de mixage et de distributions sont prévus pour contrôler la température de l'air et la direction dans laquelle il est envoyé en sortie du climatiseur.

Il est en particulier connu des climatiseurs, dits bizones, permettant d'envoyer un flux d'air à différentes températures en direction de deux zones du véhicule telles que la zone occupée par le conducteur et la zone occupéee par le passager avant. Pour cela, le climatiseur est partagé en deux chambres et il est muni de volets permettant de faire des réglages sélectifs pour chacune des zones.

Par ailleurs, il a déjà été proposé des dispositifs de climatisation comprenant un flux de dérivation permettant à une partie de l'air de ne pas traverser l'évaporateur. Le flux de dérivation entraîne notamment un gain d'énergie dans le climatiseur. Cependant, en particulier lorsque ce flux est divisé en deux circuits, un déséquilibre de débit peut intervenir entre chaque circuit ce qui génère une différence de température non désirée en sortie, pouvant aller jusqu'à plusieurs degrés Un dispositif de climatisation d'un type connu est divulgué par le document DE 10 2012 018537 A1.

L'invention a ainsi pour objet un dispositif de climatisation pour véhicule automobile, comprenant un évaporateur et au moins deux circuits de dérivation dudit évaporateur permettant une circulation d'air entre une zone située en amont de l'évaporateur et une zone située en aval de l'évaporateur, un premier desdits circuits de dérivation étant destiné à alimenter une première partie dudit dispositif et un deuxième desdits circuits de dérivation étant destiné à alimenter une deuxième partie dudit dispositif, au moins l'un des circuits de dérivation comprenant un volet de contrôle du débit d'air, ledit dispositif comprenant en outre au moins un organe de commande, permettant de contrôler sélectivement la position du ou des volets, ledit organe de commande étant configuré pour tenir compte d'un déséquilibre de débit dans le flux d'air alimentant chacun des conduits de dérivation.

Ainsi, en munissant au moins l'un des circuits de dérivation, voire chacun de circuits de dérivation, d'un volet de contrôle du débit d'air, on peut ajuster à volonté la quantité d'air envoyé en aval de façon différenciée pour chacun des circuits. Il est de la sorte permis de disposer d'un dispositif de climatisation muni d'une solution de dérivation de l'évaporateur tout en obtenant une régulation de température compatible avec un fonctionnement bizones. En outre, en cas de différence de débit en entrée des circuits de dérivation, le ou les volets permettent de compenser le déséquilibre constaté.

Selon des caractéristiques complémentaires de l'invention qui pourront être utilisées seules ou en combinaison :
- ledit dispositif comprend une première chambre configurée pour délivrer au moins un premier flux d'air en direction d'une première zone du véhicule, ladite première chambre étant destinée à être alimentée par ledit premier circuit de dérivation et/ou ledit dispositif comprend une deuxième chambre configurée pour délivrer au moins un deuxième flux d'air en direction d'une seconde zone du véhicule, ladite deuxième chambre étant destinée à être alimentée par ledit deuxième circuit de dérivation,
- ledit organe de commande est configuré pour tenir compte d'une demande de température différente dans chacune desdites zones,
- les circuits de dérivation d'air sont disposés au-dessus de l'évaporateur,
- ledit dispositif comprend un élément de mise en circulation d'air en direction de l'évaporateur,
- ledit dispositif est tel que le flux d'air généré par ledit élément de mise en circulation d'air provoque ledit déséquilibre de débit,
- l'élément de mise en circulation d'air comprend une enveloppe centrifuge de canalisation d'air, appelée volute,
- l'enveloppe centrifuge est disposée au-dessus de l'évaporateur,
- les circuits de dérivation d'air sont disposés à proximité de la volute,
- l'élément de mise en circulation d'air comprend un moteur actionnant une roue située à l'intérieur de la volute,
- chaque circuit de dérivation d'air comprend un conduit,
- lesdits conduits sont situés de part et d'autre de la volute,
- le conduit de l'un des circuit de dérivation d'air est situé sous le moteur de l'élément de mise en circulation d'air,
- le conduit de l'autre circuit de dérivation d'air est situé sous une zone d'entrée d'air du dispositif,
- le conduit situé sous le moteur de l'élément de mise en circulation d'air est muni d'une zone amovible,
- le ou les volets sont du type papillon, drapeau, à porte coulissante et/ou à tambour,
- l'évaporateur est plus large que la volute,
- chaque volet est actionné par un micro-moteur piloté indépendamment.

D'autres avantages et caractéristiques de l'invention apparaîtront à la lecture de la description suivante, donnée uniquement à titre d'exemple non limitatif, et faite en référence aux dessins annexés sur lesquels :
- la figure 1 est une vue latérale d'un dispositif de climatisation selon l'invention,
- la figure 2 est une vue de détail de la figure 1,
- la figure 3 est une vue partiel selon la coupe A-A du dispositif de la figure 1.

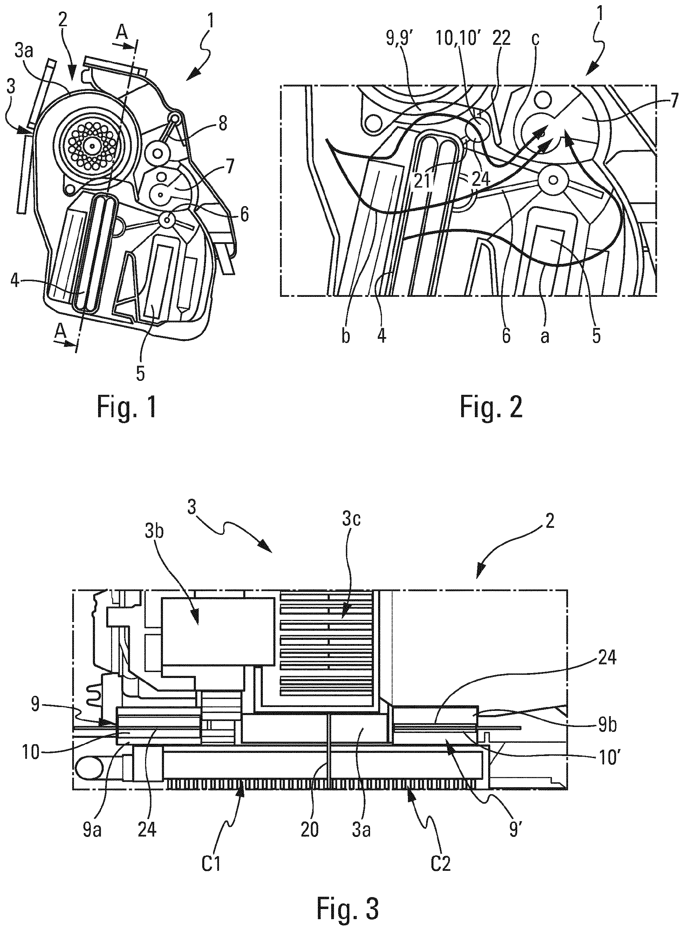

Tel qu'illustré aux figures 1 à 3, un dispositif de climatisation 1 selon l'invention comprend un circuit d'air à partir d'au moins une bouche d'entrée 2 à travers laquelle est admis de l'air. La bouche d'entrée 2 est l'entrée d'air extérieur et/ou l'entrée d'air recyclé. Le circuit d'air comprend notamment un élément de mise en circulation d'air tel qu'un pulseur d'air 3, apte à mettre en circulation l'air issu de la bouche d'entrée 2, vers une zone de traitement thermique qui comprend un évaporateur 4 et un radiateur 5. Le pulseur 3 est muni d'un moteur 3b qui entraîne une roue 3c située à l'intérieur d'une enveloppe 3a. L'enveloppe 3a est une enveloppe centrifuge de canalisation d'air appelée volute. La volute 3a est disposée au-dessus de l'évaporateur 4, elle est par exemple posée sur l'évaporateur 4 ou disposée à proximité de l'évaporateur 4. La volute 3a est de préférence moins large que l'évaporateur 4.

L'évaporateur 4 est un échangeur thermique. Son rôle consiste à refroidir le flux d'air le traversant. L'évaporateur 4 comprend ainsi un fluide frigorigène liquide qui est évaporé par la chaleur extraite de l'air à refroidir. Le radiateur 5 est quant à lui un échangeur dans lequel un fluide caloporteur voit sa température diminuer en cédant sa chaleur à l'air extérieur.

Préférentiellement, ledit dispositif comprend une première chambre C1, configurée pour délivrer au moins un premier flux d'air en direction d'une première zone du véhicule, et une deuxième chambre C2, configurée pour délivrer au moins un deuxième flux d'air en direction d'une seconde zone du véhicule. Lesdites chambres sont séparées, par exemple, par une cloison 20 de sorte que chacun des flux d'air passant par lesdites chambres C1, C2 circule en parallèle. Elles sont avantageusement symétriques par rapport au plan passant par la cloison 20.

Dans chaque chambre C1, C2, différents volets 6, 7, 8 permettent d'orienter l'air suivant plusieurs directions. Un premier volet de mixage 6 permet de répartir le flux d'air qui a traversé l'évaporateur 4 vers le radiateur 5 (chemin illustré sur la figure 2 par la flèche a) et/ou vers un chemin qui contourne le radiateur 5 (chemin illustré sur la figure 2 par la flèche b). Un deuxième volet 7, par exemple un volet tambour, répartit l'air entre une sortie d'air centrale vers les aérateurs de la console centrale, et une sortie d'air inférieure en direction des pieds du conducteur.

Un troisième volet 8, éventuellement commun aux deux chambres C1, C2 permet de répartir l'air entre les sorties d'air centrale et une sortie d'air supérieure en direction du pare-brise du véhicule.

Selon l'invention, ledit dispositif comprend deux circuits de dérivation 9, 9' permettant une circulation d'air entre une zone située en amont de l'évaporateur et une zone située en aval de l'évaporateur 4. Un premier 9 desdits circuits de dérivation est destiné à alimenter une première partie dudit dispositif, en particulier ladite chambre C1, et un deuxième 9' desdits circuits de dérivation est destiné à alimenter une deuxième partie dudit dispositif, en particulier ladite deuxième chambre C2. On permet de la sorte à une partie de l'air de ne pas traverser l'évaporateur 4. Le passage de l'air empruntant le circuit de dérivation 9 est représenté sur la figure 2 par la flèche c.

Chaque circuit de dérivation 9, 9' peut comprendre un conduit de dérivation 9a et 9b. Lesdits conduits de dérivation 9a, 9b sont tous deux disposés au-dessus de l'évaporateur 4, éventuellement en contact avec celui-ci, et de part et d'autre de la volute 3a, c'est-à-dire que les conduits 9a, 9b sont alignés horizontalement au-dessus de l'évaporateur 4. La volute 3a est en contact ou à proximité immédiate de l'évaporateur 4. On peut ainsi intégrer les circuits de dérivation 9, 9' dans le dispositif de climatisation 1, et ce sans réduction du volume de la volute 3a, ce qui permet de conserver de bonnes performances aérauliques et acoustiques. En outre, il n'est pas nécessaire de déplacer la volute 3a vers le haut pour intégrer les circuits de dérivation 9, 9'.

Autrement dit, cette disposition spécifique des circuits de dérivation 9, 9', au-dessus de l'évaporateur et à côté de la volute, et non pas entre la volute et l'évaporateur, permet de ne pas augmenter le volume du dispositif et de ne pas réduire la taille de la volute. Avantageusement, les conduits 9a, 9b, des circuits de dérivation 9, 9' sont délimités par au moins une partie de la paroi de la volute, ce qui permet de réduire encore l'encombrement du dispositif selon l'invention.

Le conduit de dérivation 9b est ici situé à proximité de la roue 3c et sous une zone d'entrée d'air du dispositif de climatisation 1. L'autre conduit de dérivation 9a, qui est situé sous le moteur 3b du pulseur d'air 3, est avantageusement muni d'une partie amovible, de manière à permettre de démonter le groupe moto-ventilateur composé du support moteur, du moteur 3b et de la roue 3c en cas de panne du groupe moto-ventilateur.

Toujours selon l'invention, au moins l'un voire chacun des circuits de dérivation 9, 9' comprend un volet 10, 10' de contrôle du débit d'air dans ledit circuit. On peut de la sorte adapter la quantité d'air envoyée dans chacune des parties du dispositif, en particulier dans chacune des chambres C1, C2, y compris lorsque le dispositif est en mode de dérivation. On aura bien sûr compris que la configuration selon laquelle l'un et/ou l'autre desdits volets 10, 10' sont fermés correspond à un mode de fonctionnement sans dérivation du dispositif, pour la ou les parties correspondantes.

A la figure 3, le volet 10 du conduit 9a est partiellement fermé tandis que le volet 10' du conduit 9b est totalement ouvert. Ledit dispositif pourra comprendre en outre au moins un organe de commande, non représenté, permettant de contrôler sélectivement la position du ou des volets 10, 10'. Ledit organe de commande est configuré pour tenir compte d'une demande de température différente dans chacune desdites zones. Il est outre configuré pour tenir compte d'un déséquilibre de débit dans le flux d'air alimentant chacun desdits circuits de dérivation.

Dans un objectif de standardisation, le dispositif de climatisation 1 selon l'invention peut aussi être adapté pour un système dit mono-zone, où l'intégralité du véhicule est réchauffée/refroidie à une température, dans ce cas l'organe de commande contrôle la position du ou des volets 10, 10' de manière synchronisée ou simultanée.

Un tel déséquilibre de débit pourra provenir, par exemple, dudit élément de mise en circulation d'air. Compte-tenu de leur configuration, de tels éléments génèrent en effet souvent un flux dont la distribution n'est pas homogène. L'alimentation de l'un ou l'autre des conduits, en particulier le conduit 9a se trouvant sous le moteur 3b, est donc privilégiée sans que cela soit désiré. Le degré d'ouverture des conduits de dérivation 9a, 9b est ainsi avantageusement contrôlé par les volets 10, 10', pour pallier ce phénomène.

Lesdits volets 10, 10' sont, par exemple, des volets papillon. Autrement dit, lesdits volets 10, 10' comprennent deux parties 21, 22 reliées entre elles par un axe 24 qui est situé à une hauteur intermédiaire entre l'extrémité inférieure et l'extrémité supérieure du volet.

En variante, non illustré, les volets 10, 10' peuvent également être un volet de type drapeau, dans lequel l'axe du volet est situé à l'extrémité inférieure ou supérieure du volet. Un volet drapeau permet un gain en section dans les conduits de dérivation 9a, 9b.

L'axe desdits volets 10, 10' pourra être relié à un actionneur, lui-même activé par le ou lesdites organes de commande desdits volets.

Lesdits volets 10, 10' pourront encore être du type à tambour ou à porte coulissante.

Le volet de l'un des conduits 9a, 9b pourra être différent du volet de l'autre conduit.

## Revendications

1. Dispositif de climatisation (1) pour véhicule automobile, comprenant un évaporateur (4) et au moins deux circuits de dérivation (9, 9') dudit évaporateur permettant une circulation d'air entre une zone située en amont de l'évaporateur (4) et une zone située en aval de l'évaporateur (4), un premier (9, 9') desdits circuits de dérivation étant destiné à alimenter une première partie dudit dispositif et un deuxième (9, 9') desdits circuits de dérivation étant destiné à alimenter une deuxième partie dudit dispositif, au moins l'un des circuits de dérivation (9, 9') comprenant un volet de contrôle du débit d'air (10, 10'), ledit dispositif comprenant en outre au moins un organe de commande, permettant de contrôler sélectivement la position du ou des volets (10, 10'), **caractérisé en ce que** ledit organe de commande est configuré pour tenir compte d'un déséquilibre de débit dans le flux d'air alimentant chacun desdits circuits de dérivation (9, 9').

2. Dispositif selon la revendication 1 dans lequel chacun des circuits de dérivation (9, 9') est muni de son propre volet (10, 10') de contrôle du débit d'air.

3. Dispositif selon l'une quelconque des revendications précédentes dans lequel ledit dispositif comprend une première chambre (C1) configurée pour délivrer au moins un premier flux d'air en direction d'une première zone du véhicule, ladite première chambre (C1) étant destinée à être alimentée par ledit premier circuit de dérivation (9) et/ou ledit dispositif comprend une deuxième chambre (C2) configurée pour délivrer au moins un deuxième flux d'air en direction d'une seconde zone du véhicule, ladite deuxième chambre (C2) étant destinée à être alimentée par ledit deuxième circuit de dérivation (9').

4. Dispositif selon l'une quelconque des revendications précédentes dans lequel les circuits de dérivation d'air (9, 9') sont disposés au-dessus de l'évaporateur (4).

5. Dispositif selon l'une quelconque des revendications précédentes comprenant un élément de mise en circulation d'air (3) en direction de l'évaporateur (4).

6. Dispositif de climatisation (1) selon la revendication 5, **caractérisé en ce que** l'élément de mise en circulation d'air (3) comprend une enveloppe centrifuge (3a) de canalisation d'air, appelée volute.

7. Dispositif de climatisation (1) selon la revendication 6, **caractérisé en ce que** l'enveloppe centrifuge (3a) est disposée au-dessus de l'évaporateur (4).

8. Dispositif de climatisation (1) selon l'une des revendications 6 et 7, **caractérisé en ce que** les circuits de dérivation d'air (9, 9') sont disposés à proximité de la volute (3a).

9. Dispositif de climatisation (1) selon l'une des revendications 6 à 8, **caractérisé en ce que** l'élément de mise en circulation d'air (3) comprend un moteur (3b) actionnant une roue (3c) située à l'intérieur de la volute (3a).

10. Dispositif de climatisation (1) selon la revendication 8 ou 9, **caractérisé en ce que** chaque circuit de dérivation d'air (9, 9') comprend un conduit (9a, 9b), lesdits conduits étant situés de part et d'autre de la volute (3a).

11. Dispositif de climatisation (1) selon la revendication 10, caractérisé en le conduit (9a) de l'un des circuit de dérivation d'air (9) est situé sous le moteur (3b) de l'élément de mise en circulation d'air (3) et le conduit (9b) de l'autre circuit de dérivation d'air est situé sous une zone d'entrée d'air du dispositif (1).

12. Dispositif (1) selon l'une quelconque des revendications précédentes, **caractérisé en ce que** le ou les volets (10, 10') sont du type papillon, drapeau, à porte coulissante et/ou à tambour.

## Patentansprüche

1. Klimatisierungsvorrichtung (1) für ein Kraftfahrzeug, die einen Verdampfer (4) und mindestens zwei Abzweigkreise (9, 9') des Verdampfers enthält, die eine Luftzirkulation zwischen einer stromaufwärts vor dem Verdampfer (4) befindlichen Zone und einer stromabwärts hinter dem Verdampfer (4) befindlichen Zone erlauben, wobei ein erster (9, 9') der Abzweigkreise dazu bestimmt ist, einen ersten Teil der Vorrichtung zu versorgen, und ein zweiter (9, 9') der Abzweigkreise dazu bestimmt ist, einen zweiten Teil der Vorrichtung zu versorgen, wobei mindestens einer der Abzweigkreise (9, 9') eine Kontrollklappe des Luftdurchsatzes (10, 10') enthält, wobei die Vorrichtung außerdem mindestens ein Steuerorgan enthält, das es ermöglicht, die Stellung der Klappe(n) (10, 10') selektiv zu kontrollieren, **dadurch gekennzeichnet, dass** das Steuerorgan konfiguriert ist, ein Durchsatz-Ungleichgewicht in dem Luftstrom zu berücksichtigen, der jeden der Abzweigkreise (9, 9') versorgt.

2. Vorrichtung nach Anspruch 1, wobei jeder der Abzweigkreise (9, 9') mit seiner eigenen Klappe (10, 10') zur Kontrolle des Luftdurchsatzes versehen ist.

3. Vorrichtung nach einem der vorhergehenden Ansprüche, wobei die Vorrichtung eine erste Kammer (C1) enthält, die konfiguriert ist, mindestens einen ersten Luftstrom in Richtung einer ersten Zone des Fahrzeugs zu liefern, wobei die erste Kammer (C1) dazu bestimmt ist, vom ersten Abzweigkreis (9) versorgt zu werden, und/oder die Vorrichtung eine zweite Kammer (C2) enthält, die konfiguriert ist, mindestens einen zweiten Luftstrom in Richtung einer zweiten Zone des Fahrzeugs zu liefern, wobei die zweite Kammer (C2) dazu bestimmt ist, vom zweiten Abzweigkreis (9') versorgt zu werden.

4. Vorrichtung nach einem der vorhergehenden Ansprüche, wobei die Luftabzweigkreise (9, 9') über dem Verdampfer (4) angeordnet sind.

5. Vorrichtung nach einem der vorhergehenden Ansprüche, die ein Element für die Luftzirkulation (3) in Richtung des Verdampfers (4) enthält.

6. Klimatisierungsvorrichtung (1) nach Anspruch 5, **dadurch gekennzeichnet, dass** das Luftzirkulationselement (3) eine Zentrifugalhülle (3a) zur Luftführung enthält, Spiralgehäuse genannt.

7. Klimatisierungsvorrichtung (1) nach Anspruch 6, **dadurch gekennzeichnet, dass** die Zentrifugalhülle (3a) über dem Verdampfer (4) angeordnet ist.

8. Klimatisierungsvorrichtung (1) nach einem der Ansprüche 6 und 7, **dadurch gekennzeichnet, dass** die Luftabzweigkreise (9, 9') in der Nähe des Spiralgehäuses (3a) angeordnet sind.

9. Klimatisierungsvorrichtung (1) nach einem der Ansprüche 6 bis 8, **dadurch gekennzeichnet, dass** das Luftzirkulationselement (3) einen Motor (3b) enthält, der ein Rad (3c) betätigt, das sich innerhalb des Spiralgehäuses (3a) befindet.

10. Klimatisierungsvorrichtung (1) nach Anspruch 8 oder 9, **dadurch gekennzeichnet, dass** jeder Luftabzweigkreis (9, 9') einen Kanal (9a, 9b) enthält, wobei die Kanäle sich zu beiden Seiten des Spiralgehäuses (3a) befinden.

11. Klimatisierungsvorrichtung (1) nach Anspruch 10, **dadurch gekennzeichnet, dass** der Kanal (9a) eines der Luftabzweigkreise (9) sich unter dem Motor (3b) des Luftzirkulationselements (3) befindet, und der Kanal (9b) des anderen Luftabzweigkreises sich unter einer Lufteintrittszone der Vorrichtung (1) befindet.

12. Vorrichtung (1) nach einem der vorhergehenden Ansprüche, **dadurch gekennzeichnet, dass** die Klappe(n) (10, 10') von der Art Drosselklappe, Fahnenklappe, mit Schiebetür und/oder mit Trommel ist(sind).

## Claims

1. Air-conditioning device (1) for a motor vehicle, comprising an evaporator (4) and at least two bypass circuits (9, 9') bypassing said evaporator allowing a circulation of air between a zone situated upstream of the evaporator (4) and a zone situated downstream of the evaporator (4), a first (9, 9') of said bypass circuits being intended to supply a first part of said device and a second (9, 9') of said bypass circuits being intended to supply a second part of said device, at least one of the bypass circuits (9, 9') comprising an air flow rate control valve (10, 10'), said device further comprising at least one control member, allowing the position of the valve or valves (10, 10') to be controlled selectively, **characterized in that** said control member is configured to take account of a flow rate imbalance in the flow of air supplying each of said bypass circuits (9, 9').

2. Device according to Claim 1, wherein each of the bypass circuits (9, 9') is provided with its own air flow rate control valve (10, 10').

3. Device according to either one of the preceding claims, wherein said device comprises a first chamber (C1) configured to deliver at least one first flow of air towards a first zone of the vehicle, said first chamber (C1) being intended to be supplied by said first bypass circuit (9) and/or said device comprises a second chamber (C2) configured to deliver at least one second flow of air towards a second zone of the vehicle, said second chamber (C2) being intended to be supplied by said second bypass circuit (9').

4. Device according to any one of the preceding claims, wherein the air bypass circuits (9, 9') are disposed above the evaporator (4).

5. Device according to any one of the preceding claims, comprising an element for circulating air (3) towards the evaporator (4) .

6. Air-conditioning device (1) according to Claim 5, **characterized in that** the air circulating element (3) comprises a centrifugal air-channelling casing (3a), called volute casing.

7. Air-conditioning device (1) according to Claim 6, **characterized in that** the centrifugal casing (3a) is disposed above the evaporator (4).

8. Air-conditioning device (1) according to one of Claims 6 and 7, **characterized in that** the air bypass circuits (9, 9') are disposed in proximity to the volute casing (3a).

9. Air-conditioning device (1) according to one of Claims 6 to 8, **characterized in that** the air circulating element (3) comprises a motor (3b) actuating a wheel (3c) situated inside the volute casing (3a).

10. Air-conditioning device (1) according to Claim 8 or 9, **characterized in that** each air bypass circuit (9, 9') comprises a duct (9a, 9b), said ducts being situated on either side of the volute casing (3a).

11. Air-conditioning device (1) according to Claim 10, **characterized in that** the duct (9a) of one of the air bypass circuits (9) is situated under the motor (3b) of the air circulating element (3) and the duct (9b) of the other air bypass circuit is situated under an air intake zone of the device (1).

12. Device (1) according to any one of the preceding claims, **characterized in that** the flap or flaps (10, 10') are of butterfly, flag, sliding gate and/or drum type.
